# EUROPÄISCHE PATENTSCHRIFT

(11) **EP 2 606 714 B1**
(45) Veröffentlichungstag und Bekanntmachung des Hinweises auf die Patenterteilung: **23.03.2016**
(21) Anmeldenummer: 12008467.8
(22) Anmeldetag: 20.12.2012
(51) Int. Cl.: A01F 15/07, A01F 15/08

(54) **Vorrichtung zum Umhüllen von Rundballen**
Device for wrapping round bales
Dispositif d'enveloppement de balles rondes

(30) Priorität: 22.12.2011 DE 102011122149
(43) Veröffentlichungstag der Anmeldung: 26.06.2013
(73) Patentinhaber: Maschinenfabrik Bernard Krone GmbH, 48480 Spelle (DE)
(72) Erfinder: Martensen, Klaus, 48477 Hörstel (DE); van Bassen, Alois, 49832 Freren (DE); Friemerding, Sven, 49832 Andervenne (DE); Lehmann, Marco, 48477 Hörstel (DE)

(56) Entgegenhaltungen:
- EP-A1- 1 097 627
- DE-A1- 4 138 499
- DE-A1- 10 334 680
- GB-A- 2 305 648
- JP-A- 2002 253 042
- JP-A- 2007 189 918

## Beschreibung

Die Erfindung betrifft eine landwirtschaftliche Vorrichtung zum Umhüllen von Rundballen, gemäß dem Oberbegriff des Anspruchs 1. Aus dem Stand der Technik sind diverse derartige Wickeleinrichtungen bekannt. Es gibt sie als gezogene Wickeleinrichtungen, welche an einen Schlepper angehängt und von diesen angetrieben auf dem Feld von Ballen zu Ballen fahren um diese aufzunehmen und mit Wickelmaterial, insbesondere Folie einzuwickeln, oder aber auch stationär betrieben werden, wobei sie mit zu umwickelnden Ballen beladen werden. Weiterhin sind Wickeleinrichtungen als Maschinenkombination mit einer Rundballenpresse bekannt. Bei diesen Kombinationen wird der soeben gepresste Rundballen direkt an einen Wickeltisch der Wickeleinrichtung übergeben, mit Folie umhüllt und dann auf dem Feld abgelegt. Die Ablage der vollständig umhüllten Rundballen erfolgt bevorzugt durch eine Kippbewegung des Wickeltisches, so dass die Rundballen durch die Schwerkraftwirkung auf den Erdboden rollen. Heutzutage werden bei der Ablage der Rundballen vermehrt Ballenmanipulatoren verwendet, welche eine derartige Verlagerung der Rundballen während ihrer Ablage auf das Feld bewirken, dass sie auf ihren Stirnseiten stehend abgelegt werden. Dadurch wird insbesondere eine Sicherung gegen ein Wegrollen der Rundballen in Hanglage erreicht. Weitere Gründe dafür sind, dass zum einen das Greifen der Rundballen bei der Einsammlung vereinfacht wird und zum anderen dass aufgrund der höheren Anzahl an Folienlagen auf den Stirnseiten gegenüber der Mantelfläche der Rundballen Undichtigkeiten durch Beschädigungen an der Folie vermieden werden.

Ein derartiger Ballenmanipulator ist beispielsweise aus der DE 103 34 680 B4 bekannt. Dieser Ballenmanipulator umfasst einen am Wickeltisch eines Ballenwicklers angebrachten und über eine Abstützeinrichtung gegenüber dem Erdboden abgestützten Arm mit einem Richtungsablenker, welcher die Rundballen auf deren Stirnseite kippt. Gebräuchlich werden die mit Folie umhüllten Rundballen im Stand des Ballenwicklers abgelegt. Dadurch können die Rundballen möglichst schonend und sicher auf den Erdboden abgelegt werden. Es ist jedoch ebenfalls möglich die umhüllten Rundballen während der Fahrt abzulegen. Beispielsweise werden voraussichtlich in Zukunft vermehrt kontinuierlich arbeitende Press-Wickelkombinationen eingesetzt, bei denen die Rundballen generell während der Fahrt abgelegt werden. Hierbei treten insbesondere bei erhöhten Fahrgeschwindigkeiten Probleme bei der Ablage der Rundballen auf deren Stirnseite auf. Dazu kommt, dass zukünftig die Anwendung von ISOBUS-fähigen Zugfahrzeugen in Verbindung mit ISOBUS-fähigen Press-Wickelkombinationen, wobei beispielsweise die Fahrgeschwindigkeit automatisch an verschiedene Parameter der Press-Wickelkombinationen oder Einsatzbedingungen angepasst werden, zunehmend an Bedeutung gewinnt. Dadurch können unterschiedlichste Fahrgeschwindigkeiten der Press-Wickelkombination auftreten, wobei es kaum sicherzustellen ist, dass bei den verschiedensten Fahrgeschwindigkeiten die Rundballen auf ihrer Stirnseite stehen bleiben.

Deshalb liegt der Erfindung die Aufgabe zugrunde, eine verbesserte Vorrichtung zum Umhüllen von Rundballen, insbesondere aus Erntegut zu schaffen, bei der während der Fahrt der Wickeleinrichtung eine sichere Ablage der mit Wickelmaterial umhüllten Rundballen auf deren Stirnseite erreicht wird.

Erfindungsgemäß wird diese Aufgabe durch die kennzeichnenden Merkmale des Anspruchs 1 gelöst. Vorteilhafte Ausgestaltungen sind Gegenstand der weiteren Ansprüche.

Nach der Erfindung umfasst die Vorrichtung zum Umhüllen von Rundballen, insbesondere aus Erntegut, mit Wickelmaterial, einen Ballenmanipulator, der eine derartige Verlagerung der Rundballen während ihrer Ablage auf das Feld bewirkt, dass die Rundballen auf ihren Stirnseiten stehend abgelegt werden, wobei eine Steuer- und Regeleinrichtung der Vorrichtung zum Umhüllen von Rundballen eine Verstellung des Ballenmanipulators in Abhängigkeit von der Fahrgeschwindigkeit der Vorrichtung zum Umhüllen von Rundballen während der Ballenablage für eine sichere Ablage der Rundballen auf deren Stirnseite bewirkt.

Derartige Ballenmanipulatoren sind in diversen Ausführungsformen bekannt. Vorzugsweise sind diese direkt an einem Wickeltisch der Wickeleinrichtung angebracht und weisen einen Arm mit einer Umlenkeinrichtung und einer Stützeinrichtung zum Abstützen des Arms gegenüber dem Erdboden auf. Der Wickeltisch wird zur Ablage der Rundballen vorzugsweise durch hydraulische Stellantriebe aus einer waagerechten Normalstellung, in der die Rundballen umhüllt werden, in eine nach hinten abgesenkte Ablagestellung gekippt, so dass die Rundballen durch die Schwerkraftwirkung in Richtung des Ballenmanipulators rollen und durch die Umlenkeinrichtung auf die Stirnseite auf dem Erdboden abgelegt werden. Es sind ebenfalls Ausführungen bekannt, bei denen die Rundballen beispielsweise nach dem Wickelvorgang von einer nachgeordneten Kippmulde aufgenommen und durch dessen Kippbewegung auf die Stirnseite abgelegt werden. In einer besonders vorteilhaften Ausführung wird die Verstellung des Ballenmanipulators in Abhängigkeit von der Fahrgeschwindigkeit der Wickeleinrichtung und/oder von zumindest einem Parameter der Rundballen von der Steuer- und Regeleinrichtung der Wickeleinrichtung automatisch ausgeführt. Als Grundlage dafür können der Steuerung durch zumindest eine Sensoreinrichtung ermittelte Fahrgeschwindigkeiten und/oder Parameter der Rundballen dienen. Bei einer Press-Wickelkombination kann die Sensoreinrichtung zur Erfassung der Fahrgeschwindigkeiten sowohl der Press-Wickelkombination als auch dem Zugfahrzeug zugeordnet sein. Bei letzterer Variante steht die mit der Steuer- und Regeleinrichtung des Zugfahrzeugs verbundene Sensoreinrichtung vorzugsweise über eine ISOBUS-Leitung mit der Steuer- und Regeleinrichtung der Press-Wickelkombination in Verbindung.

Ebenso denkbar wäre eine manuelle, als Grundausführung vorgesehene Verstellung des Ballenmanipulators in Abhängigkeit von der Fahrgeschwindigkeit der Wickeleinrichtung. Hierbei erfolgt die Steuerung basierend auf von dem Bediener zuvor vorgegebene Werte. Aus diversen Praxistests wurden verschiedene Abhängigkeiten zwischen der Fahrgeschwindigkeit der Wickeleinrichtung und der Stellung des Ballenmanipulators, wie beispielsweise der Winkel einer Umlenkeinrichtung in Bezug auf die Waagerechte, ermittelt. Des Weiteren bestehen ebenfalls Beziehungen zwischen zumindest einem Parameter des abzulegenden Rundballens und der Stellung des Ballenmanipulators. Zur Verstellung des Winkels des gesamten Ballenmanipulators kann beispielsweise die vorzugsweise ein Stützrad aufweisende Abstützeinrichtung in der Höhe verstellbar angebracht sein. Die über Hydraulikzylinder einstellbare Umlenkeinrichtung kann unter anderem durch eine unterschiedliche Ansteuerung der Ventile in dem Hydrauliksystem erfolgen.

Ferner wäre auch eine Verstellung der Bewegung des Ballenmanipulators zur Ablage der Rundballen in Abhängigkeit von der Fahrgeschwindigkeit der Wickeleinrichtung und/oder von zumindest einem Parameter des abzulegenden Rundballens denkbar. Beispielsweise wäre es bei einem Ballenmanipulator, welcher als eine dem Wickeltisch nachgeordnete kippbar angeordnete Mulde ausgebildet ist denkbar, die Kippgeschwindigkeit in Abhängigkeit von der Fahrgeschwindigkeit der Wickeleinrichtung und/oder von zumindest einem Parameter des abzulegenden Rundballens zu verstellen.

Im Folgenden wird ausschließlich näher auf die Verstellung des Winkels der Umlenkeinrichtung des Ballenmanipulators eingegangen. Zu den Parametern der Rundballen können beispielsweise der Durchmesser und/oder das Gewicht der jeweiligen Rundballen zählen. Es ist vorgesehen, bei größeren oder schwereren Rundballen einen großen Winkel der Umlenkeinrichtung der Vorrichtung zum Aufstellen der Rundballen und dementsprechend bei kleineren oder leichteren Rundballen einen kleinen Winkel der Umlenkeinrichtung in Bezug auf die Waagerechte zu wählen. Die Verstellung in Abhängigkeit dieser Parameter der Rundballen durch die Steuer- und Regeleinrichtung kann sowohl zusätzlich zu der geschwindigkeitsabhängigen Verstellung des Winkels der Umlenkeinrichtung als auch unabhängig davon erfolgen. Bei der Verstellung des Winkels der Umlenkeinrichtung des Ballenmanipulators in Abhängigkeit von der Fahrgeschwindigkeit der Wickeleinrichtung während der Ballenablage ist es vorgesehen, bei hohen Fahrgeschwindigkeiten einen kleinen Winkel der Umlenkeinrichtung im Bezug auf die Waagerechte und dementsprechend bei niedrigen Fahrgeschwindigkeiten einen großen Winkel der Umlenkeinrichtung im Bezug auf die Waagerechte einzustellen. Des Weiteren ist es in einer besonders vorteilhaften Ausführung vorgesehen, die Kippbewegung des Wickeltisches der Wickeleinrichtung in Abhängigkeit der Fahrgeschwindigkeit während der Ballenablage und/oder an zumindest einem Parameter des abzulegenden Rundballens zu steuern und die Verstellung des Ballenmanipulators daran anzupassen.

Somit ist eine mit geringem konstruktivem Aufwand ausführbare Lösung zur sicheren Ablage der Rundballen auf deren Stirnseite auf dem Feld während der Fahrt einer Wickeleinrichtung geschaffen. Weitere vorteilhafte Ausgestaltungen der Erfindung ergeben sich aus den Unteransprüchen und den Figuren der Zeichnung.

Es zeigt:
- Fig. 1:: ein Ausführungsbeispiel einer erfindungsgemäßen Vorrichtung zum Umhüllen von Rundballen in Kombination mit einer kontinuierlich arbeitenden Rundballenpresse;
- Fig. 2:: eine schematische Perspektivansicht eines Wickeltisches der Vorrichtung zum Umhüllen von Rundballen aus Fig. 1 mit einem Ballenmanipulator

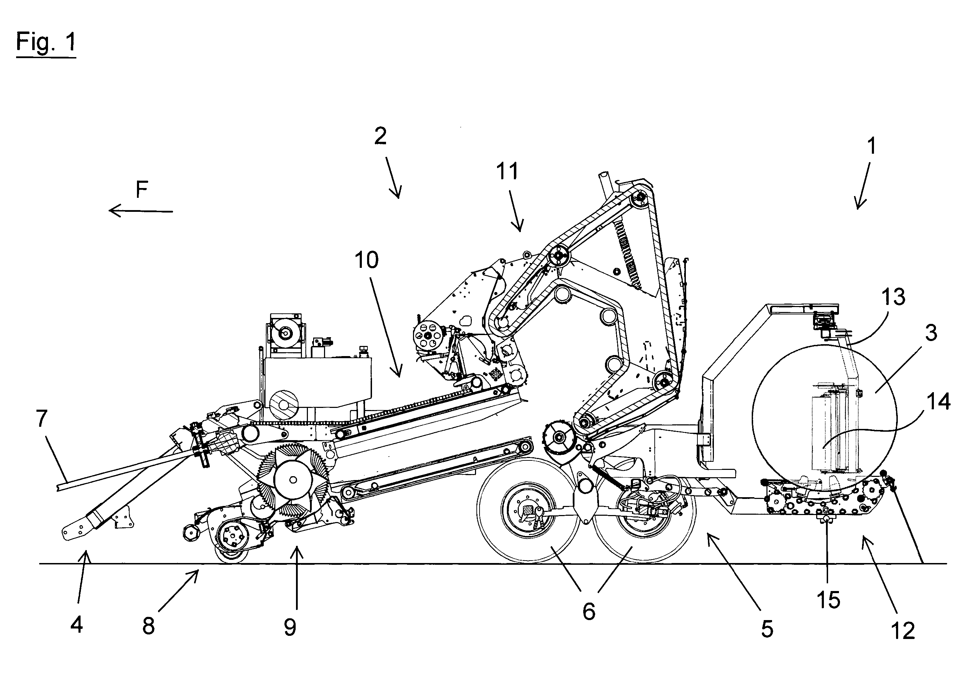

Die Fig. 1 zeigt eine schematisch dargestellte Seitenansicht einer erfindungsgemäßen Wickeleinrichtung 1 in Kombination mit einer kontinuierlich arbeitenden Rundballenpresse 2. Beide Einheiten ruhen auf einem gemeinsamen, über eine Zugdeichsel 4 mit einem in dieser Figur nicht dargestellten Zugfahrzeug, insbesondere landwirtschaftlichen Schlepper, verbindbaren Grundrahmen 5, welcher sich über Räder 6 zum Boden hin abstützt. Der Antrieb der gesamten Press-Wickelkombination erfolgt über eine mit dem Zugfahrzeug koppelbaren Gelenkwelle 7. Die Rundballenpresse 2 der Press-Wickelkombination umfasst im Wesentlichen eine Aufnahmeeinrichtung 8 zur Aufnahme von auf dem Boden zumeist in Schwaden liegenden Erntegut. An diese schließt sich in Gutflussrichtung entgegen der Fahrtrichtung F eine Förder- und Schneideinrichtung 9 an, die das Erntegut weiter zu einem Speicherraum 10 fördert, welcher das Erntegut entweder zwischenspeichert, oder durch den das Erntegut zu einer Presskammer 11, in der der Rundballen 3 gebildet und mit Netz umwickelt wird, weitergefördert wird. Für die Übergabe der fertig gepressten Rundballen 3 aus der Presskammer 11 zum Wickeltisch 12 der Wickeleinrichtung 1 ist die Rundballenpresse 2 mit einer verschwenkbaren Übergabeeinrichtung ausgestattet. Vom Wickeltisch 12 aufgenommen, wird der Rundballen 3 von diesem um seine Längsmittelachse in Drehung versetzt, wobei dann gleichzeitig von den an einem Wickelarm 13 angeordnete Folienrollen 14 durch Umkreisen des Rundballens 3 Folienbahnen auf diesen übertragen werden. Zur Ablage der mit Folie eingewickelten Rundballen 3 ist der Wickeltisch 12 im Ausführungsbeispiel um eine quer zur Fahrtrichtung F zumindest annähernd horizontal ausgerichtete Achse 15 kippbar angeordnet.

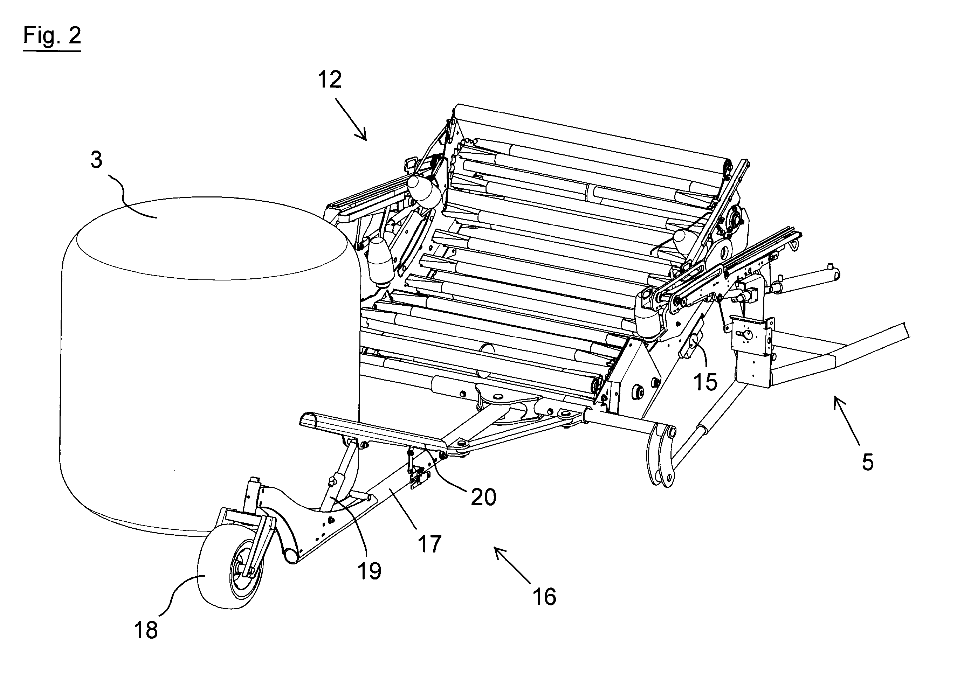

Die Fig. 2 zeigt einen vergrößerten, perspektivisch dargestellten Ausschnitt des an dem Grundrahmen 5 der Press-Wickelkombination kippbar angebrachten Wickeltisches 12 aus Fig. 1 mit einem Ballenmanipulator 16 zum Aufstellen der Rundballen 3 auf deren Stirnseite. Der Wickeltisch 12 ist in der Fig. 2 in einer nach hinten gekippten Stellung dargestellt. Durch die Schrägstellung des Wickeltisches 12 rollen die Rundballen 3 aufgrund der Schwerkraftwirkung auf ihren Weg zum Boden einseitig auf den in der Betriebsstellung gezeigten Ballenmanipulator 16 zum Aufstellen der Rundballen 3 auf.

In diesem Ausführungsbeispiel weist der Ballenmanipulator 16 zum Aufstellen der Rundballen 3 einen Arm 17 auf, welcher über ein Stützrad 18 gegenüber dem Erdboden abgestützt ist. Dieser Arm 17 umfasst eine über einen Hydraulikzylinder 19 verstellbare Umlenkeinrichtung 20, welche den Rundballen 3 während seines Abrollens zum Boden einen derartigen Impuls versetzt, dass der Rundballen 3 auf eine seiner Stirnseiten auf dem Boden zu stehen kommt. Die Verstellung der Umlenkeinrichtung 20 in Abhängigkeit von der Fahrgeschwindigkeit und/oder von zumindest einem Parameter der Rundballen 3 erfolgt in diesem Ausführungsbeispiel durch die über eine ISO-BUS-Leitung mit einer Steuer- und Regeleinrichtung des Zugfahrzeugs verbundene Steuer- und Regeleinrichtung der Press-Wickelkombination. Zur Erfassung der Fahrgeschwindigkeiten der Press-Wickelkombination ist dem Zugfahrzeug eine mit der Steuer- und Regeleinrichtung des Zugfahrzeugs verbundene Sensoreinrichtung zur Erfassung der Fahrgeschwindigkeiten während der Ablage zugeordnet. In diesem Ausführungsbeispiel stellt der Ballenparameter den Durchmesser der Rundballen 3 dar. Eine Verstellung der Umlenkeinrichtung 20 des Ballenmanipulators 16 zum Aufstellen der Rundballen 3 in Abhängigkeit von dem Gewicht der Rundballen 3 wäre hierbei ebenfalls denkbar. Dieses kann sowohl in Kombination mit der Verstellung der Umlenkeinrichtung 20 in Abhängigkeit des Durchmessers der Rundballen 3, also auch unabhängig davon erfolgen. Für die Verstellung der Umlenkeinrichtung 20 in Abhängigkeit des Durchmessers werden in diesem Ausführungsbeispiel zuvor von dem Bediener festgelegte Werte verwendet. Hierbei ist es vorgesehen, bei einem kleinen Durchmesser der Rundballen 3 auch einen kleinen Winkel der Umlenkeinrichtung 20 im Bezug auf die Waagerechte und dementsprechend bei einem großen Durchmesser der Rundballen 3 auch einen großen Winkel im Bezug auf die Waagerechte einzustellen. Bei der Anpassung der Stellung der Umlenkeinrichtung 20 an die Fahrgeschwindigkeiten der Press-Wickelkombination gilt im Wesentlichen folgende Faustformel: Je höher die Fahrgeschwindigkeit, desto kleiner wird der Winkel der Umlenkeinrichtung 20 in Bezug auf die Waagerechte eingestellt.

Dadurch wird insbesondere erreicht, dass jeder einzelne Rundballen 3 während der Fahrt sicher auf eine seiner Stirnseiten auf dem Feld abgelegt wird.

## Patentansprüche

1. Vorrichtung (1) zum Umhüllen von Rundballen (3), insbesondere aus Erntegut, mit Wickelmaterial, wobei ein Ballenmanipulator (16) eine derartige Verlagerung der Rundballen (3) während ihrer Ablage auf das Feld bewirkt, dass die Rundballen (3) auf ihren Stirnseiten stehend abgelegt werden, **dadurch gekennzeichnet, dass** eine Steuer- und Regeleinrichtung der Vorrichtung (1) zum Umhüllen von Rundballen (3) eine Verstellung des Ballenmanipulators (16) in Abhängigkeit von der Fahrgeschwindigkeit der Vorrichtung (1) zum Umhüllen von Rundballen (3) während der Ballenablage für eine sichere Ablage der Rundballen (3) auf deren Stirnseite bewirkt.

2. Vorrichtung (1) zum Umhüllen von Rundballen (3) nach Anspruch 1, **dadurch gekennzeichnet, dass** die Steuer- und Regeleinrichtung der Vorrichtung (1) zum Umhüllen von Rundballen (3) eine Verstellung des Ballenmanipulators (16) in Abhängigkeit von zumindest einem Parameter des abzulegenden Rundballens (3) für eine sichere Ablage der Rundballen (3) auf deren Stirnseite bewirkt.

3. Vorrichtung (1) zum Umhüllen von Rundballen (3) nach Anspruch 1 und 2, **dadurch gekennzeichnet, dass** die Steuer- und Regeleinrichtung der Vorrichtung (1) zum Umhüllen von Rundballen (3) eine Verstellung des Ballenmanipulators (16) in Abhängigkeit von durch den Bediener vorgegebenen Fahrgeschwindigkeiten der Vorrichtung (1) zum Umhüllen von Rundballen (3) während der Ballenablage und Parametern des abzulegenden Rundballens (3) bewirkt.

4. Vorrichtung (1) zum Umhüllen von Rundballen (3) nach zumindest einem der vorhergehenden Ansprüche, **dadurch gekennzeichnet, dass** die Steuer- und Regeleinrichtung der Vorrichtung (1) zum Umhüllen von Rundballen (3) eine automatische Verstellung des Ballenmanipulators (16) in Abhängigkeit von durch Sensoreinrichtungen erfassten Fahrgeschwindigkeiten der Vorrichtung (1) zum Umhüllen von Rundballen (3) während der Ballenablage und Parametern des abzulegenden Rundballens (3) bewirkt.

5. Vorrichtung (1) zum Umhüllen von Rundballen (3) nach zumindest einem der vorhergehenden Ansprüche, **dadurch gekennzeichnet, dass** die Steuer- und Regeleinrichtung eine Verstellung eines Winkels des Ballenmanipulators (16) in Bezug auf die Waagerechte bewirkt.

6. Vorrichtung (1) zum Umhüllen von Rundballen (3) nach zumindest einem der vorhergehenden Ansprüche, **dadurch gekennzeichnet, dass** die Steuer- und Regeleinrichtung eine Verstellung der Bewegung des Ballenmanipulators (16) zur Ballenablage bewirkt.

7. Vorrichtung (1) zum Umhüllen von Rundballen (3) nach zumindest einem der vorhergehenden Ansprüche, **dadurch gekennzeichnet, dass** die Vorrichtung (1) zum Umhüllen von Rundballen (3) einen Wickeltisch (12) aufweist, an dem ein Ballenmanipulator (16) angeordnet ist, welcher einen Arm (17) mit einer Umlenkeinrichtung (20) zum Umlenken der Rundballen (3) auf deren Stirnseite und ein Stützrad (18) zum Abstützen des Arms (17) gegenüber dem Erdboden aufweist.

8. Vorrichtung (1) zum Umhüllen von Rundballen (3) nach Ansprüch 7, **dadurch gekennzeichnet, dass** die Steuer- und Regeleinrichtung eine Verstellung des Winkels der Umlenkeinrichtung (20) des Ballenmanipulators (3) in Bezug auf die Waagerechte bewirkt.

9. Vorrichtung (1) zum Umhüllen von Rundballen (3) nach Anspruch 7, **dadurch gekennzeichnet, dass** die Steuer- und Regeleinrichtung eine Kippbewegung des Wickeltisches (12) zur Ablage der umhüllten Rundballen (3) auf das Feld an die Fahrgeschwindigkeit der Vorrichtung (1) zum Umhüllen von Rundballen (3) während der Ballenablage und an zumindest einen Parameter des abzulegenden Rundballens (3) anpasst.

10. Vorrichtung (1) zum Umhüllen von Rundballen (3) nach Anspruch 9, **dadurch gekennzeichnet, dass** die Steuer- und Regeleinrichtung der Vorrichtung (1) zum Umhüllen von Rundballen (3) eine Verstellung des Ballenmanipulators (16) in Abhängigkeit von der Fahrgeschwindigkeit der Vorrichtung (1) zum Umhüllen von Rundballen (3) während der Ballenablage und von zumindest einem Parameter des abzulegenden Rundballens (3) an die abhängig angepasste steuerbare Kippbewegung des Wickeltisches (12) anpasst.

11. Vorrichtung (1) zum Umhüllen von Rundballen (3) nach zumindest einem der Ansprüche 2-4, 9 oder 10, **dadurch gekennzeichnet, dass** der zumindest eine Parameter der Rundballen (3) einen Wert über das Gewicht oder den Durchmesser der Rundballen (3) darstellt.

12. Vorrichtung (1) zum Umhüllen von Rundballen (3) nach zumindest einem der vorhergehenden Ansprüche, **dadurch gekennzeichnet, dass** die Vorrichtung (1) zum Umhüllen von Rundballen (3) Bestandteil einer Press-Wickelkombination ist, wobei die Ballenpresse bevorzugt als kontinuierlich arbeitende Presse ausgebildet ist.

## Claims

1. Device (1) for wrapping round bales (3), in particular round bales of agricultural crops, in wrapping material, a bale manipulator (16) moving the round bales (3), while said bales are being deposited onto the field, in such a way that the round bales (3) are deposited so as to stand on their end faces, **characterised in that**, while the bales are being deposited, a controller and regulator of the device (1) for wrapping round bales (3) adjusts the bale manipulator (16) according to the travelling speed of the device (1) for wrapping round bales (3) in order to reliably deposit the round bales (3) on the end face thereof.

2. Device (1) for wrapping round bales (3) according to claim 1, **characterised in that** the controller and regulator of the device (1) for wrapping round bales (3) adjusts the bale manipulator (16) according to at least one parameter of the round bale (3) to be deposited in order to reliably deposit the round bales (3) on their end face.

3. Device (1) for wrapping round bales (3) according to claim 1 and claim 2, **characterised in that**, while the bales are being deposited, the controller and regulator of the device (1) for wrapping round bales (3) adjusts the bale manipulator (16) according to travelling speeds of the device (1) for wrapping round bales (3) that are predetermined by the operator, and according to parameters of the round bale (3) to be deposited.

4. Device (1) for wrapping round bales (3) according to at least one of the preceding claims, **characterised in that**, while the bales are being deposited, the controller and regulator of the device (1) for wrapping round bales (3) automatically adjusts the bale manipulator (16) according to travelling speeds of the device (1) for wrapping round bales (3) that are detected by sensor apparatuses, and according to parameters of the round bale (3) to be deposited.

5. Device (1) for wrapping round bales (3) according to at least one of the preceding claims, **characterised in that** the controller and regulator adjusts an angle of the bale manipulator (16) relative to the horizontal.

6. Device (1) for wrapping round bales (3) according to at least one of the preceding claims, **characterised in that** the controller and regulator adjusts the movement of the bale manipulator (16) in order to deposit the bales.

7. Device (1) for wrapping round bales (3) according to at least one of the preceding claims, **characterised in that** the device (1) for wrapping round bales (3) comprises a wrapping table (12), on which a bale manipulator (16) is arranged which comprises an arm (17) having a turning apparatus (20) for turning the round bales (3) over onto their end face, and a support wheel (18) for supporting the arm (17) with respect to the ground.

8. Device (1) for wrapping round bales (3) according to claim 7, **characterised in that** the controller and regulator adjusts the angle of the turning apparatus (20) of the bale manipulator (3) relative to the horizontal.

9. Device (1) for wrapping round bales (3) according to claim 7, **characterised in that**, while the bales are being deposited, the controller and regulator adapts a tilting movement of the wrapping table (12) to the travelling speed of the device (1) for wrapping round bales (3) and to at least one parameter of the round bale (3) to be deposited in order to deposit the wrapped round bales (3) onto the field.

10. Device (1) for wrapping round bales (3) according to claim 9, **characterised in that**, while the bales are being deposited, the controller and regulator of the device (1) for wrapping round bales (3) adapts an adjustment of the bale manipulator (16), according to the travelling speed of the device (1) for wrapping round bales (3) and according to at least one parameter of the round bale (3) to be deposited, to the accordingly adapted, controllable tilting movement of the wrapping table (12).

11. Device (1) for wrapping round bales (3) according to at least one of claims 2-4, 9 or 10, **characterised in that** the at least one parameter of the round bales (3) is greater than the weight or the diameter of the round bales (3).

12. Device (1) for wrapping round bales (3) according to at least one of the preceding claims, **characterised in that** the device (1) for wrapping round bales (3) is a component of a press-wrapper combination, the baler being preferably designed as a continuously operating press.

## Revendications

1. Installation (1) permettant d'envelopper des balles rondes (3), en particulier des balles de produits de récolte avec un matériau d'enrubannage, dans laquelle un manipulateur de balles (16) effectue un déplacement des balles rondes (3) pendant leur dépôt sur le champ de sorte qu'elles soient déposées debout sur leurs faces frontales,
**caractérisée en ce qu'**
un dispositif de commande et de réglage de l'installation (1) permettant d'envelopper des balles rondes (3) effectue un réglage du manipulateur de balles (16) en fonction de la vitesse de déplacement de l'installation (1) permettant d'envelopper les balles rondes (3) pendant le dépôt des balles pour permettre un dépôt plus sur des balles rondes (3) sur leur face frontale.

2. Installation (1) permettant d'envelopper des balles rondes (3) conforme à la revendication 1,
**caractérisée en ce que**
le dispositif de commande et de réglage de l'installation (1) permettant d'envelopper des balles rondes (3) effectue un réglage du manipulateur de balles (16) en fonction d'au moins un paramètre des balles rondes (3) à déposer pour permettre un dépôt plus sur des balles rondes (3) sur leur face frontale.

3. Installation (1) permettant d'envelopper des balles rondes (3) conforme aux revendications 1 et 2,
**caractérisée en ce que**
le dispositif de commande et de réglage de l'installation (1) permettant d'envelopper des balles rondes (3) effectue un réglage du manipulateur de balles (16) en fonction de vitesses de déplacement de l'installation (1) permettant d'envelopper des balles rondes (3) prédéfinies par l'utilisateur pendant le dépôt des balles et de paramètres des balles (3) à déposer.

4. Installation (1) permettant d'envelopper des balles rondes (3) conforme à au moins l'une des revendications précédentes,
**caractérisée en ce que**
le dispositif de commande et de réglage de l'installation (1) permettant d'envelopper des balles rondes (3) effectue un réglage automatique du manipulateur de balles (16) en fonction de vitesses de l'installation (1) permettant d'envelopper des balles rondes (3) détectées par des dispositifs de capteur pendant le dépôt de balles et de paramètres des balles rondes (3) à déposer.

5. Installation (1) permettant d'envelopper des balles rondes (3) conforme à au moins l'une des revendications précédentes,
**caractérisée en ce que**
le dispositif de commande et de réglage effectue un réglage de l'angle du manipulateur de balles (16) par rapport à l'horizontale.

6. Installation (1) permettant d'envelopper des balles rondes (3) conforme à au moins l'une des revendications précédentes,
**caractérisée en ce que**
le dispositif de commande et de réglage effectue un réglage du déplacement du manipulateur de balles (16) pour le dépôt de balles.

7. Installation (1) permettant d'envelopper des balles rondes (3) conforme à au moins l'une des revendications précédentes,
**caractérisée en ce que**
l'installation (1) permettant d'envelopper des balles rondes (3) comporte une table d'enroulement (12) sur laquelle est monté un manipulateur de balles (16) qui comporte un bras (17) avec un dispositif de déviation (20) pour dévier les balles rondes (3) sur leur face frontale et une roue support (18) pour permettre au bras (17) de s'appuyer par rapport au sol.

8. Installation (1) permettant d'envelopper des balles rondes (3) conforme à la revendication 7,
**caractérisée en ce que**
le dispositif de commande et de réglage effectue un réglage de l'angle du dispositif de déviation (20) du manipulateur de balles (3) par rapport à l'horizontale.

9. Installation (1) permettant d'envelopper des balles rondes (3) conforme à la revendication 7,
**caractérisée en ce que**
le dispositif de commande et de réglage adapte le mouvement de basculement de la table d'enroulement (12) pour permettre de déposer les balles rondes (3) enveloppées sur le champ à la vitesse de l'installation (1) permettant d'envelopper des balles rondes (3) pendant le dépôt des balles et à au moins un paramètre de la balle ronde à déposer.

10. Installation (1) permettant d'envelopper des balles rondes (3) conforme à la revendication 9,
**caractérisée en ce que**
le dispositif de commande et de réglage de l'installation (1) permettant d'envelopper des balles rondes adapte le réglage du manipulateur de balles (16) en fonction de la vitesse de déplacement de l'installation (1) permettant d'envelopper des balles rondes (3) pendant le dépôt des balles et à au moins un paramètre de la balle ronde (3) à déposer, au mouvement de basculement commandable de la table d'enroulement (12) adaptée en conséquence.

11. Installation (1) permettant d'envelopper des balles rondes (3) conforme à au moins l'une des revendications 2 à 4, 9, 10,
**caractérisée en ce que**
le paramètre des balles rondes (3) correspond à une valeur concernant le poids ou le diamètre des balles rondes (3).

12. Installation (1) permettant d'envelopper des balles rondes (3) conforme à au moins l'une des revendications précédentes,
**caractérisée en ce que**
l'installation (1) permettant d'envelopper des balles rondes (3) est un composant d'un combiner presse-enrubanneur, la presse à balles étant de préférence réalisée sous la forme d'une presse travaillant en continu.
